# FASCICULE DE BREVET EUROPEEN

(11) **EP 1 848 087 B1**
(45) Date de publication et mention de la délivrance du brevet: **15.07.2015**
(21) Numéro de dépôt: 07290336.2
(22) Date de dépôt: 20.03.2007
(51) Int. Cl.: H02J 7/00

(54) **Dispositif et procédé d'auto-regulation de la charge d'un generateur electrochimique**
Vorrichtung und Verfahren zur Selbstregulierung der Ladung eines elektrochemischen Generators
Device and method for self-regulating the charge of an electrochemical generator

(30) Priorité: 21.03.2006 FR 0602443
(43) Date de publication de la demande: 24.10.2007
(73) Titulaire: SAFT, 93178 Bagnolet (FR)
(72) Inventeur: Maloizel, Serge, 16730 Trois Palis (FR); Juan, Antoine, 16410 Dirac (FR)
(74) Mandataire: Hirsch & Associés

(56) Documents cités:
- EP-A1- 1 455 194
- US-A1- 2002 195 996
- US-B1- 6 879 133

## Description

L'invention concerne le domaine des dispositifs de contrôle de la charge d'un générateur électrochimique. L'invention concerne plus particulièrement le domaine des dispositifs de contrôle de la charge d'un ou plusieurs générateurs électrochimiques connectés en un circuit parallèle à un dispositif de charge.

Les dispositifs de contrôle (ou d'auto-régulation) peuvent contrôler l'état de charge et de décharge d'un générateur électrochimique, mais également sa température et/ou le courant le traversant. Chaque générateur électrochimique peut être déchargé pour fournir l'énergie électrique nécessaire à une application donnée, par exemple un véhicule électrique. Le générateur électrochimique peut en outre être connecté à un dispositif de charge pour augmenter l'énergie électrique stockée:

L'état de charge d'un générateur électrochimique fait l'objet d'une surveillance permanente de façon à éviter que il ne soit soumis à une surcharge pouvant conduire à un emballement thermique et à sa destruction.

L'état de surcharge d'un générateur électrochimique de type lithium-ion peut être facilement détecté. En effet, la tension d'un générateur électrochimique de type lithium-ion reflète son état de charge. Ce n'est pas le cas pour un générateur électrochimique de type nickel métal hydrure pour lequel la tension au cours de la charge ne reflète pas son état de charge.

Pour éviter la surcharge d'un générateur électrochimique de type nickel métal hydrure, on doit maîtriser le courant de charge, surtout dans le cas où plusieurs générateurs sont connectés en parallèle à un chargeur.

Le document EP 1 455 194 décrit un dispositif de contrôle de la charge d'un générateur. Ce dispositif comprend :
- un moyen de mesure du courant traversant le générateur électrochimique ;
- un moyen d'intégration du courant mesuré ;
- un moyen de comparaison de la valeur du courant intégré par rapport à une valeur de consigne;
- un moyen d'interrompre le passage du courant dans le générateur électrochimique lorsque le courant intégré atteint la valeur de consigne.

Le document US 2002/0195996 décrit un dispositif de contrôle de la charge d'un générateur appelé BMU (Battery Management Unit). Ce dispositif comprend :
- un moyen de mesure du courant traversant de générateurs électrochimiques connectés en série,
- un moyen d'intégration du courant mesuré ;
- un moyen de comparaison de la valeur du courant intégré par rapport à une valeur de consigne;
- un moyen d'interrompre le passage du courant dans les générateurs électrochimiques lorsque le courant intégré atteint la valeur de consigne.

En effet, les générateurs électrochimiques ne sont pas toujours disponibles dans la capacité électrique souhaitée. Plusieurs générateurs électrochimiques sont alors connectés ensemble en un circuit parallèle afin d'augmenter la capacité électrique nécessaire au fonctionnement d'une application donnée. Or, la résistance interne d'un générateur électrochimique peut varier d'un générateur à l'autre et donc le courant de charge peut varier selon les branches parallèles du circuit, ce qui nécessite de prévoir un dispositif de gestion de la charge relativement sophistiqué. Un tel dispositif doit être adapté à réguler le courant de charge dans chacune des branches du circuit parallèle afin de compenser les variations de résistance interne de chaque branche du circuit.

La solution utilisée actuellement nécessite d'utiliser des dispositifs de contrôle par branche qui communiquent entre eux. Le courant du chargeur est d'abord reçu par une première branche, puis par une seconde branche et ainsi de suite jusqu'à la branche n°N pour alors reprendre sur la première branche. Le basculement de branche à branche se fait via un dispositif de communication entre les dispositifs de chaque branche.

Pour fonctionner correctement, le dispositif de contrôle nécessite d'avoir une communication fiable entre les branches.

De plus, l'ajout d'une branche, lors de la connexion en parallèle d'un ou de plusieurs générateurs électrochimiques supplémentaires, nécessite d'informer chaque dispositif de contrôle de la présence de la branche supplémentaire.

On recherche donc un dispositif de contrôle, permettant une régulation de la charge du ou des générateurs électrochimiques de chaque branche du circuit parallèle, et qui soit adapté à réguler automatiquement le courant dans chaque branche, indépendamment de l'ajout d'une branche supplémentaire ou du retrait d'une ou de plusieurs des branches.

On recherche également un dispositif de contrôle de la charge n'utilisant pas de dispositif de communication inter-branche.

A cet effet, l'invention propose un dispositif de régulation de la charge d'une pluralité de générateurs électrochimiques selon la revendication 1 et un procédé de régulation de la charge d'au moins un générateur électrochimique selon la revendication 6.

Selon un mode de réalisation, le moyen de mesure du courant comprend une résistance en série (3) avec le bloc de générateur électrochimique, et un amplificateur (4) connecté aux bornes de la résistance.

Selon un mode de réalisation, le moyen d'intégration du courant est un calculateur (5), adapté en outre à comparer la valeur du courant intégré par rapport à une valeur de consigne et à commander l'interruption du passage du courant dans le bloc de générateur électrochimique (1) lorsque le courant intégré atteint la valeur de consigne.

Selon un mode de réalisation, le dispositif de régulation ne comprend pas de dispositif de communication entre les branches du circuit, adapté à dévier le courant d'une branche du circuit vers une autre branche du circuit.

Selon un mode de réalisation, le générateur électrochimique possède un électrolyte alcalin.

Selon un mode de réalisation, le générateur électrochimique est de type nickel métal hydrure.

D'autres caractéristiques et avantages de l'invention apparaîtront à la lecture de la description détaillée qui suit des modes de réalisation de l'invention, donnés à titre d'exemple uniquement et en références aux dessins qui montrent :
- figure 1 illustre de façon schématique le dispositif de contrôle de charge selon l'invention.
- figure 2 représente la variation du courant de charge dans le générateur et la variation du courant intégré en fonction du temps.
- figure 3 représente la répartition des courants de charge dans deux branches du circuit parallèle avec le dispositif de contrôle de charge selon l'invention.
- figure 4 représente une variante possible de réalisation du dispositif de contrôle de charge selon l'invention.

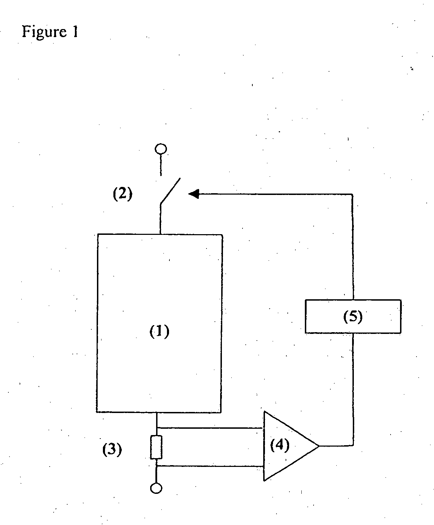

Le fonctionnement du dispositif de contrôle de charge va maintenant être décrit en faisant référence à la figure 1. L'élément (1) est un bloc de générateurs électrochimiques (1), dont on souhaite réguler le courant de charge. Ce bloc de générateurs électrochimiques est constitué d'un ou de plusieurs générateurs électrochimiques, quel que soit leur mode de connexion entre eux. Les générateurs électrochimiques peuvent être ceux qui possèdent un électrolyte alcalin, et de préférence encore, ceux de type nickel métal hydrure.

Le dispositif de contrôle de charge comprend les éléments suivants:
- un interrupteur (2) disposé en série avec le bloc de générateurs électrochimiques. Il peut être par exemple disposé entre l'une des bornes du chargeur et l'une des polarités du bloc de générateurs électrochimiques. Il a pour fonction d'arrêter le passage du courant dans le bloc de générateurs électrochimiques. Son ouverture / fermeture est commandée par un calculateur (5).
- un moyen de mesure du courant (3, 4) traversant le bloc de générateurs électrochimiques. Ce moyen de mesure du courant peut comprendre une résistance placée en série avec le bloc et un amplificateur (4). La fonction de la résistance (3) est de permettre une mesure indirecte du courant de charge traversant le bloc de générateurs électrochimiques. L'amplificateur (4) comprend des voies d'entrée connectées aux bornes du moyen de mesure du courant (3). Une voie de sortie est reliée à l'entrée du calculateur (5) qui intègre la valeur du courant traversant la résistance (3). Le moyen de mesure du courant peut également comprendre tout système permettant de transformer un courant en une tension, tel qu'un capteur à effet hall, un capteur à boucle fermé, un capteur à détection magnétique.

Le calculateur (5) comprend en outre des moyens de comparaison de la valeur du courant intégré par rapport à une valeur de consigne. Quand la valeur du courant intégré atteint la valeur de consigne, le calculateur commande l'ouverture de l'interrupteur (2) et le maintient ouvert pendant un certain laps de temps, ce qui a pour effet d'interrompre temporairement la charge du bloc de générateurs électrochimiques pendant ce laps de temps. Lorsque ce laps de temps est écoulé, le calculateur commande la fermeture de l'interrupteur et la charge reprend. On obtient ainsi une régulation du courant de charge à la valeur désirée.

Le principe de la régulation repose sur le fait que le calculateur adapte les durées de fermeture et d'ouverture de l'interrupteur en fonction du courant mesuré et du courant moyen que l'on souhaite faire passer à travers le bloc de générateurs pour une charge optimale du bloc de générateurs électrochimiques. Le courant moyen est fixé par l'utilisateur en fonction des caractéristiques du bloc de générateurs électrochimiques (capacité, surface des électrodes, etc.)

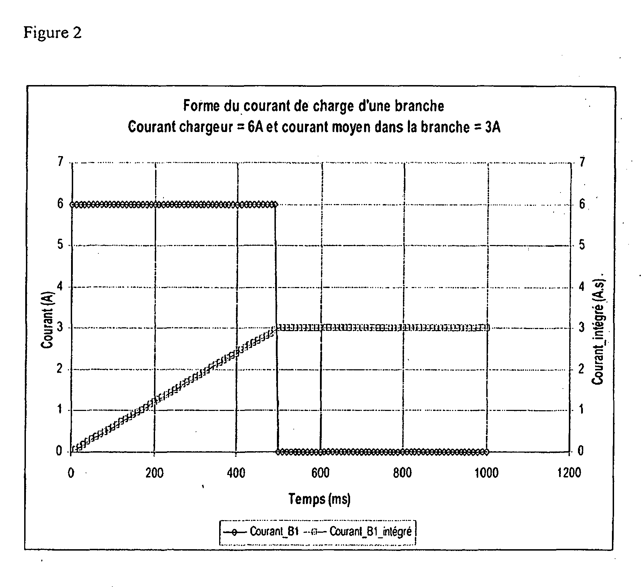

La figure 2 représente, sur un exemple, la variation du courant de charge dans un bloc de générateurs électrochimiques et la variation du courant intégré en fonction du temps (équivalent à une quantité d'électricité).

Supposons que le bloc de générateurs électrochimiques doit être rechargé à un courant moyen de 3A et que le chargeur délivre un courant de charge de 6A. Le courant du chargeur est supérieur au courant moyen souhaité ; il est donc nécessaire de réguler le courant de charge pour éviter la surcharge du bloc de générateurs électrochimiques.

Au temps t=0, l'interrupteur (2) est fermé. L'alimentation débite un courant de 6A.

Du temps t=0 au temps t < 500 ms, le calculateur intègre le courant et compare la valeur du courant intégré à la valeur prédéterminée de 3 A.s. Tant que le courant intégré est inférieur à 3 A.s, l'interrupteur reste fermé.

A t=500 ms, le calculateur détecte qu'une quantité d'électricité de 3 A.s a traversé le bloc. La valeur de consigne de la quantité d'électricité ayant traversé le bloc, est atteinte. Le calculateur commande l'ouverture de l'interrupteur jusqu'à t=ls.

A t=1 s, le calculateur commande la fermeture de l'interrupteur, et la charge reprend.

Sur une période d'une seconde, le courant moyen délivré est bien de 3A car l'interrupteur est resté ouvert sur la moitié de la période.

Le dispositif selon l'invention est donc bien adapté aux cas où le chargeur débiterait un courant trop fort par rapport au courant de charge désiré. De plus, la charge du générateur s'adapte automatiquement à toute source d'alimentation.

L'invention concerne aussi un dispositif de contrôle de la charge d'une pluralité de blocs de générateurs électrochimiques. Ces blocs peuvent être connectés en parallèle à un chargeur. Chaque connexion au chargeur d'un bloc de générateurs forme une branche du circuit. Chaque branche est munie d'un dispositif de contrôle de charge selon l'invention.

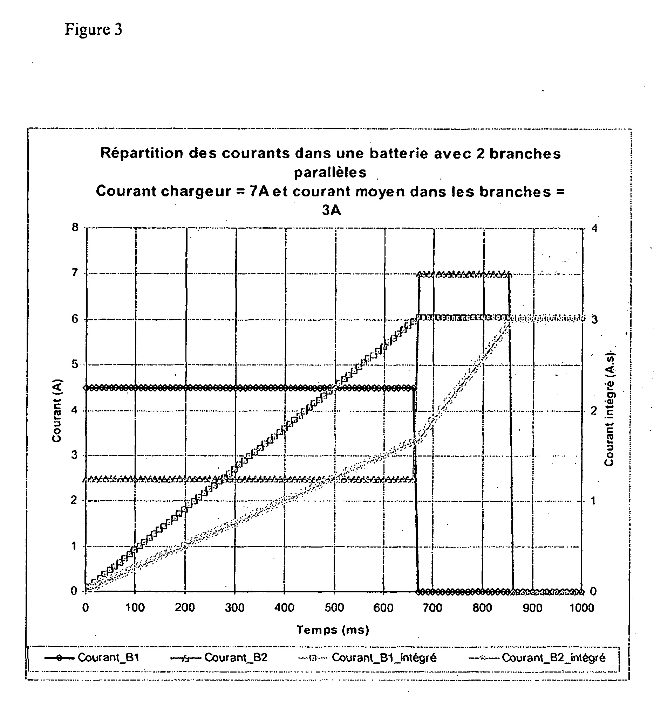

La figure 3 représente, sur un exemple, la variation en fonction du temps du courant de charge de deux blocs de générateurs électrochimiques connectés sur deux branches parallèles ainsi que la variation du courant intégré en fonction du temps.

Dans cet exemple, le chargeur débite 7A sur deux branches en parallèle équipées chacune d'un dispositif selon l'invention et on souhaite charger chaque branche à un courant de 3A moyen.

Supposons qu'à t=0s, la branche B1 accepte un courant de 4,5A et que la branche B2 accepte un courant de 2,5A en raison d'un déséquilibre entre ces branches.

Branche 1 : le calculateur de la branche B1 maintient fermé l'interrupteur de la branche 1 de t=0 à t=0,667 s (0,667= 3 /4,5). Pour 0,667 s < t < 1 s, l'interrupteur de la branche 1 est maintenu ouvert.

Branche 2 : de t=0 à t=0,667 s, le courant traversant la branche B2 est de 2,5 A.

A t>0,667 s, le courant traversant la branche B2 passe de 2,5 A à 7 A du fait de l'ouverture de l'interrupteur de la branche B1. L'interrupteur de la branche B2 reste ensuite fermé pendant 0,191 s. Le calculateur de la branche B2 maintient fermé l'interrupteur de la branche B2 au total pendant 0,858 s.

La quantité d'électricité ayant traversé la branche B2 pendant une seconde est donc bien de 3 A.s, si on effectue le calcul (2,5 x 0,667 + 7 x 0,191 = 3).

Pour différencier les courants de charge, d'équilibrage ou d'entretien, il suffit à chaque calculateur de chaque branche de modifier la durée de fermeture de son interrupteur.

Un des avantages du dispositif selon l'invention est que chaque branche régule automatiquement le courant qui la traverse.

Chaque branche comporte son propre dispositif de contrôle de charge fonctionnant indépendamment des dispositifs de contrôle de charge disposés sur les autres branches du circuit. On a ainsi supprimé le besoin d'une communication entre les branches. En outre, l'ajout d'une branche supplémentaire ne perturbe pas le fonctionnement des autres branches du circuit. De nouveaux blocs de générateurs peuvent ainsi être ajoutés à un système d'alimentation électrique d'une application donnée, sans nécessiter un réglage du fonctionnement des blocs déjà présents.

Le dispositif est bien adapté à réguler le courant dans le cas où il existe un « déséquilibre » entre les branches du circuit, c'est-à-dire des branches traversées par des courants différents.

Dans l'exemple de la figure 3, le nombre de blocs de générateurs électrochimiques est de deux. Il est entendu que le dispositif de l'invention n'est pas limité à deux blocs mais peut comprendre un nombre supérieur de blocs.

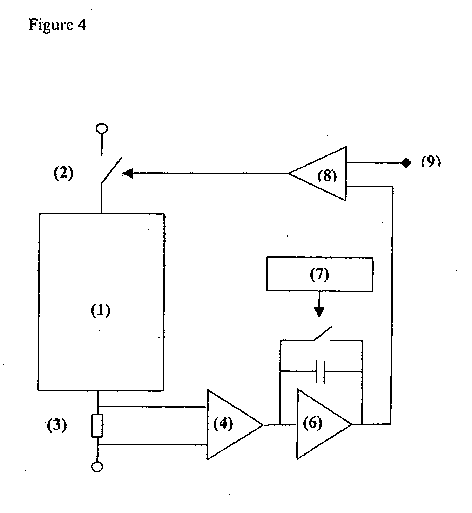

La figure 4 représente une variante possible de réalisation du dispositif de contrôle de charge selon l'invention, dans laquelle le calculateur est remplacé par un intégrateur analogique (6) associé à un compteur (7) et à un comparateur (8).

A t=0, le compteur (7) réinitialise l'intégrateur (6), ce qui provoque la fermeture de l'interrupteur (2), le courant amplifié par l'amplificateur (4) est ensuite intégré par l'intégrateur (6). Quand le signal de sortie de l'intégrateur (6) atteint la valeur de la consigne (9), la sortie du comparateur (8) bascule ce qui provoque l'ouverture de l'interrupteur (2) et l'arrêt du courant de charge. Après un certain temps pendant lequel l'interrupteur reste ouvert, la charge reprend. On obtient donc bien un fonctionnement identique à celui décrit en référence à la figure 1.

Bien entendu, la présente invention n'est pas limitée aux modes de réalisation décrits à titre d'exemple; ainsi, le calculateur de chaque branche pourra également intégrer les fonctions de contrôle des phases de charge ou de décharge en lui associant des moyens de mesure de la température de la branche et de mesure de tension de la branche ou de sous blocs de la branche.

## Revendications

1. Dispositif de régulation de la charge d'une pluralité de générateurs électrochimiques, comprenant au moins deux blocs de générateur électrochimique (1) connectés en parallèle à un chargeur, chaque connexion d'un bloc au chargeur comprenant une branche du circuit qui comprend:
- un moyen de mesure (3, 4) du courant traversant le bloc de générateur électrochimique,
- un moyen d'intégration du courant mesuré (5, 6, 7),
- un moyen de comparaison (5, 8) de la valeur du courant intégré par rapport à une valeur de consigne (9) qui est une valeur de courant moyen fixée par un utilisateur,
- un moyen d'interrompre (2) temporairement le passage du courant dans le bloc de générateur électrochimique lorsque le courant intégré atteint la valeur de consigne et de reprendre le passage du courant dans le bloc de générateur électrochimique lorsque le courant intégré est inférieur à la valeur de consigne.

2. Dispositif selon la revendication 1, dans lequel le moyen de mesure du courant comprend une résistance en série (3) avec le bloc de générateur électrochimique, et un amplificateur (4) connecté aux bornes de la résistance.

3. Dispositif selon la revendication 1 ou 2, dans lequel le moyen d'intégration du courant est un calculateur (5), adapté en outre à comparer la valeur du courant intégré par rapport à une valeur de consigne et à commander l'interruption du passage du courant dans le bloc de générateur électrochimique (1) lorsque le courant intégré atteint la valeur de consigne.

4. Dispositif selon la revendication 1, **caractérisé en ce que** le générateur électrochimique possède un électrolyte alcalin.

5. Dispositif selon la revendication 4, **caractérisé en ce que** le générateur électrochimique est de type nickel métal hydrure.

6. Procédé de régulation de la charge d'au moins un générateur électrochimique (1) comprenant les étapes de :
- mesure du courant traversant le générateur électrochimique,
- intégration du courant,
- comparaison de la valeur du courant intégré par rapport à une valeur de consigne qui est une valeur de courant moyen fixée par un utilisateur,
- adaptation des durées de fermeture et d'ouverture d'un interrupteur apte à interrompre temporairement la charge du générateur, en fonction de la valeur du courant intégré et de la valeur de consigne, dans laquelle adaptation: - l'interrupteur s'ouvre lorsque la valeur du courant intégré atteint la valeur de consigne ;
- l'interrupteur se ferme lorsque la valeur du courant intégré est inférieure à la valeur de consigne.

7. Procédé selon la revendication 6, dans lequel la mesure du courant est effectuée grâce à une résistance en série (3) avec le générateur électrochimique, et un amplificateur (4) connecté aux bornes de la résistance.

8. Procédé selon l'une des revendications 6 à 7, dans lequel l'intégration du courant est réalisée au moyen d'un calculateur (5), adapté en outre à comparer la valeur du courant intégré par rapport à une valeur de consigne et à commander l'interruption du passage du courant dans le générateur électrochimique (1) lorsque le courant intégré atteint la valeur de consigne.

9. Procédé selon l'une des revendications 6 à 8, **caractérisé en ce que** le générateur électrochimique possède un électrolyte alcalin.

10. Procédé selon l'une des revendications 6 à 8, **caractérisé en ce que** le générateur électrochimique est de type nickel métal hydrure.

## Patentansprüche

1. Vorrichtung zur Regulierung des Ladezustands mehrerer elektrochemischer Stromerzeuger, umfassend mindestens zwei elektrochemische Stromerzeugerblöcke (1), die in Parallelschaltung mit einem Ladegerät verbunden sind, wobei jede Verbindung eines Blocks mit dem Ladegerät eine Zweigleitung des Schaltkreises umfasst, welche Folgendes umfasst:
- ein Mittel (3, 4) zur Messung des Stroms, der durch den elektrochemischen Stromerzeugerblock fließt,
- ein Mittel (5, 6, 7) zum Integrieren des gemessenen Stroms,
- ein Mittel (5, 8) zum Vergleichen des Wertes des integrierten Stroms mit einem Sollwert (9), bei welchem es sich um einen mittleren Stromwert handelt, der von einem Verwender festgelegt wird,
- ein Mittel (2) zum vorübergehenden Unterbrechen des Stromflusses in dem elektrochemischen Stromerzeugerblock, wenn der integrierte Strom den Sollwert erreicht hat, und zur Wiederaufnahme des Stromflusses in dem elektrochemischen Stromerzeugerblock, wenn der integrierte Strom geringer als der Sollwert ist.

2. Vorrichtung nach Anspruch 1, wobei das Mittel zum Messen des Stroms einen Widerstand (3) umfasst, der mit dem elektrochemischen Stromerzeugerblock in Reihe geschaltet ist, sowie einen Verstärker (4), der mit den Anschlüssen des Widerstands verbunden ist.

3. Vorrichtung nach Anspruch 1 oder 2, wobei es sich bei dem Mittel zum Integrieren des Stroms um einen Rechner (5) handelt, der darüber hinaus dazu geeignet ist, den Wert des integrierten Stroms mit einem Sollwert zu vergleichen und das Unterbrechen des Stromflusses in dem elektrochemischen Stromerzeugerblock (1) zu befehlen, wenn der integrierte Strom den Sollwert erreicht.

4. Vorrichtung nach Anspruch 1, **dadurch gekennzeichnet, dass** der elektrochemische Stromerzeuger einen alkalischen Elektrolyten besitzt.

5. Vorrichtung nach Anspruch 4, **dadurch gekennzeichnet, dass** der elektrochemische Stromerzeuger vom Typ Nickel-Metallhydrid ist.

6. Verfahren zur Regulierung des Ladezustands mindestens eines elektrochemischen Stromerzeugers (1), wobei dieses die folgenden Schritte umfasst:
- Messen des Stroms, der durch den elektrochemischen Stromerzeuger fließt,
- Integrieren des Stroms,
- Vergleichen des Wertes des integrierten Stroms mit einem Sollwert, bei welchem es sich um einen mittleren Stromwert handelt, der von einem Verwender festgelegt wird,
- Anpassen der Schließ- und der Öffnungsdauer eines Schalters, der dazu geeignet ist, das Laden des Stromerzeugers Abhängigkeit vom Wert des integrierten Stroms und vom Sollwert vorübergehend zu unterbrechen, wobei im Rahmen dieser Anpassung:
- der Schalter sich öffnet, wenn der Wert des integrierten Stroms den Sollwert erreicht;
- der Schalter sich schließt, wenn der Wert des integrierten geringer als der Sollwert ist;

7. Verfahren nach Anspruch 6, wobei die Messung des Stroms mittels eines Widerstands (3) erfolgt, der mit dem elektrochemischen Stromerzeugerblock in Reihe geschaltet ist, sowie mittels eines Verstärkers (4), der mit den Anschlüssen des Widerstands verbunden ist.

8. Verfahren nach einem der Ansprüche 6 bis 7, wobei die Integration des Stroms mittels eines Rechner (5) erfolgt, der darüber hinaus dazu geeignet ist, den Wert des integrierten Stroms mit einem Sollwert zu vergleichen und das Unterbrechen des Stromflusses in dem elektrochemischen Generatorblock (1) zu befehlen, wenn der integrierte Strom den Sollwert erreicht.

9. Verfahren nach einem der Ansprüche 6 bis 8, **dadurch gekennzeichnet, dass** der elektrochemische Stromerzeuger einen alkalischen Elektrolyten besitzt.

10. Verfahren nach einem der Ansprüche 6 bis 8, **dadurch gekennzeichnet, dass** der elektrochemische Stromerzeuger vom Typ Nickel-Metallhydrid ist.

## Claims

1. A device for controlling the charging of a plurality of electrochemical cells, comprising at least two sets of electrochemical cells (1) connected in parallel to a charger, each connection of a set to the charger comprising a branch of a circuit which comprises:
- a means (3, 4) for measuring the current passing through the set of electrochemical cells,
- a means (5, 6, 7) for integrating the measured current,
- a means (5, 8) for comparing the value of the integrated current with a set point value (9) which is a mean current value set by a user,
- a means (2) for temporarily interrupting the passage of the current into said set of electrochemical cells when the integrated current reaches the set point value and for restarting passage of current into the set of electrochemical cells when the integrated current value is less than the set point value.

2. The device according to claim 1, in which the means for measuring the current comprises a resistor (3) in series with the set of electrochemical cells, and an amplifier (4) connected across the terminals of the resistor.

3. The device according to claim 1 or 2, in which the means for integrating the current is a computer (5) further adapted for comparing the value of the integrated current with a set point value and ordering the interruption of the passage of the current into the set of electrochemical cell (1) when the integrated current reaches the set point value.

4. The device according to claim 1, **characterized in that** the electrochemical cell has an alkaline electrolyte

5. The device according to claim 4, **characterized in that** the electrochemical cell is of the nickel metal-hydride type.

6. A method for controlling the charging of at least one electrochemical cell (1), comprising the steps of:
- measuring the current passing through the electrochemical cell;
- integrating the current;
- comparing the value of the integrated current with a set point value which is a mean current value set by a user,
- adapting the durations of closing and opening of a switch adapted to temporarily interrupt charging of the cell, as a function of the integrated current value and the set point value, in which, in said adaptation:
- the switch opens when the integrated current value reaches the set point value;
- the switch closes when the integrated current value is less than the set point value.

7. The method according to claim 6, in which measuring of the current is performed using a resistor (3) in series with the electrochemical cell, and an amplifier (4) connected across the terminals of the resistor.

8. The method according to one of claims 6 or 7, in which integrating the current is performed using a computer (5) further adapted for comparing the value of the integrated current with a set point value and ordering the interruption of the passage of the current into the electrochemical cell (1) when the integrated current reaches the set point value.

9. The method according to one of claims 6 to 8, **characterized in that** the electrochemical cell has an alkaline electrolyte

10. The method according to one of claims 6 to 8, **characterized in that** the electrochemical cell is of the nickel metal-hydride type.
